# EUROPEAN PATENT APPLICATION

(11) **EP 1 457 612 A1**
(43) Date of publication of application: **15.09.2004**
(21) Application number: 04251471.1
(22) Date of filing: 15.03.2004
(51) Int. Cl.: E04B 1/80, E04C 2/16, F16L 59/065

(54) **Vacuum insulation article**

(30) Priority: 14.03.2003 US 388876
(71) Applicant: Energy Storage Technologies, Inc., Dayton, Ohio 45459 (US)
(72) Inventor: Rusek, Stanley J., Granville Ohio 43023 (US)
(74) Representative: Keltie, David Arthur

(57) **Abstract**

A vacuum insulation article is provided which includes a core comprised of multiple plies of glass fibre mats and a vacuum sealed enclosure containing the core. The glass fibres in the mats are highly oriented and have a diameter of less than about 5.0 microns which allows the core to superinsulate at moderate vacuum levels of between about 13.3 Pa and 133.3 Pa (0.1 and 1.0 Torr) as well as in the high vacuum range. The cores may be formed into flat or three-dimensional shapes. The vacuum insulation article is preferably formed by inserting the core into the enclosure, and evacuating and sealing the enclosure.

## Description

The present invention relates to a thermal vacuum insulation article, and more particularly, to a thermal vacuum insulation article formed from a self-supporting core comprising multiple plies of glass fibre mats containing highly-oriented glass fibres, which article provides superinsulation performance at moderate vacuum levels.

Vacuum insulation panels are known for various uses including insulating containers where it is desirable to maintain the temperature of food and other items at a constant temperature during delivery. For example, vacuum insulation panels have been used in shipping containers, coolers, and refrigerated cargo areas of vehicles such as trucks, trains, planes, etc. Vacuum insulation panels have also been employed in the storage and transport of temperature-sensitive materials such as medicines, vaccines and the like.

Vacuum insulation panels may be formed from various open-cell microporous low-density organic foam cores that are placed in a film or envelope and then evacuated and sealed. Some organic foam cores can superinsulate at moderate vacuum levels (in the absolute pressure range between 13.33 Pa and 133.33 Pa (0.1 and 1.0 Torr)), and with the appropriate desiccants or getters, exhibit long life. Typical thermal resistivities of such organic foam cores are between 52 and 68 m K/W per cm (19 and 25 R per inch), with a core density range of between about 64 and 128 kg/m³ (4 and 8 pounds per cubic foot). Such cores are typically used with conventional heat sealable polymer film vacuum envelopes which contain metallized layers and/or metal foil layers to control the entry of gaseous species into the core. Examples of organic foam cores include polystyrene (Dow Instill®) and polyurethane.

However, while organic foam cores are light in weight and generally perform well, they have a limited temperature range, are flammable, somewhat transparent to thermal radiation wavelengths (if non-opacified), and cannot be easily shaped into three-dimensional objects. In addition, the hydrophobic nature of organic foams limits self-gettering and requires that desiccants and getters be employed to control the uptake of gaseous species (especially water) which gradually enter through the non-hermetic film or envelope and reduce the vacuum level of the panel over time.

Vacuum insulation cores have also been developed which comprise open cell, microporous silica powder or aerogels. These cores can generally be made self-gettering with respect to water because of their hydrophilic nature, which maintains the vacuum level without the prolific use of desiccants and getters. Such cores possess high surface areas, superinsulate at moderate vacuum levels, and can be successfully contained within conventional heat sealable low conductance high barrier metallized or foil film envelopes for long periods. Such cores may comprise non-opacified types, which have thermal resistivity of between about 49 and 55 m K/W per cm (equivalent to an R value thermal resistivity of 18 and 20 R per inch), and opacified types, which have a thermal resistivity of between about 41 and 123 m K/W per cm (15 and 45 R per inch). The density range of such cores is between about 80 and 192 kg/m³ (5 and 12 pounds per cubic foot). Examples of such cores are precipitated silica, fumed silica, and Nanogel®. However, while such inorganic cores have high temperature capability and are nonflammable, they are expensive to produce or are difficult to form into three-dimensional shapes because they are either amorphous or board-like in nature.

Glass fibre wool has also been used to form vacuum insulation cores, an example of which is a glass wool core board with a thin metal jacket vacuum panel, previously commercially available from Owens Coming under the designation Aura@. However, it is known in the art that high vacuum levels (less than 2.67 Pa (0.02 Torr) absolute pressure) must be maintained to obtain target thermal resistivity values of about 205 to 273 m K/W per cm (75 to 100 R per inch) for such panels. It has also been found that the use of hermetically welded thin metal vacuum jackets or envelopes have been required to maintain high vacuum levels to achieve superinsulation performance. Such high target thermal resistivity values are needed to compensate for the "thermal short circuit" effect of the thin metal vacuum jacket. In addition, preparing glass wool board as a microporous core material for vacuum insulation panels requires substantial heat and pressure to compact or heat-set and purify the fluffy, randomly oriented low-density glass wool materials. Typical finished core board densities range between 272 and 305 kg/m³ (17 and 19 pounds per cubic foot). Molecular sieves, and PdO or other active metal-type getters have been used to maintain a proper vacuum over long periods. However, the effective panel R values can be diminished by half or more (compared to the same size panel made from conventional heat sealable metallized polymer film) due to the use of the welded thin metal vacuum jackets as discussed above. Further, a thin metal panel which is half the size of another similar panel can lose half or more of its effective panel thermal resistivity value (or R value) as there is more edge effect per unit area for the smaller panel. In addition, glass wool core boards cannot be easily shaped into three-dimensional objects. The construction of such glass wool core-based vacuum panels is also relatively expensive.

Accordingly, there is a need in the art for a vacuum insulation core for use in a vacuum insulation article which may be produced at low cost, which may easily be formed into three-dimensional shapes, and which exhibits high insulation performance at moderate vacuum levels.

### SUMMARY OF THE INVENTION

The present invention meets that need by providing a vacuum insulating article utilizing an improved vacuum insulation core preferably comprised of multiple plies of glass fibre mats containing highly oriented glass fibres. The core may be formed into numerous flat panel, folded panel, or three-dimensional vacuum article configurations. The core superinsulates at moderate vacuum levels between about 13.33 Pa and 133.33 Pa (0.01 and about 1.0 Torr), as well as under high vacuum. The reduction of the vacuum level requirement and the ease of manufacturing the core allows for low cost, mass fabrication of vacuum insulating articles. In addition, vacuum insulation articles utilizing the core of the present invention may be made using conventional vacuum panel heat sealable polymer films, and may include desiccants, molecular sieves, and getters. The core is non-flammable and has a self-gettering property with respect to water as it is hydrophilic. Further, radiative heat transport is minimized as the glass fibres are opaque to the infrared wavelengths of interest.

According to one aspect of the present invention, a vacuum insulation article is provided comprising a core of multiple plies of glass fibre mats containing highly oriented glass fibres. By "highly oriented", it is meant that substantially all of the glass fibres in the mats are oriented at about 90° to the primary direction of heat flow.

Preferably, the glass fibres have a diameter of less than about 5.0 microns. More preferably, the glass fibres have a diameter of between about 0.3 and about 3.0 microns, and most preferably, about 2.5 microns.

The core preferably has a density of between about 64 and 401 kg/m³ (4 to 25 lbs/ft.³), and more preferably, about 240 kg/m³ (15 lbs/ft.³).

The vacuum insulation core is enclosed within a vacuum sealed enclosure or envelope. Preferably, the enclosure comprises a polymer film which is heat sealable.

Preferably, each of the multiple plies comprising the core has a thickness of between about 0.5 mm and 254 mm (0.020 inches and 1.0 inches), and more preferably, between about 1.5 mm to 2.3 mm (0.060 inches to 0.090 inches). In one embodiment of the invention, the plies are in the form of a stack and are oriented at 90 degrees to one another.

In one embodiment of the invention, the glass fibres in the core comprise a combination of medium diameter glass fibres and small diameter glass fibres. By medium fibres, it is meant glass fibres having a diameter between about 2.3 and 3.0 microns. By small fibres, it is meant glass fibres having a diameter of between about 0.3 and 1.5 microns.

In an alternative embodiment of the invention, the core may further comprise fibres selected from polymeric fibres and carbon fibres in addition to glass fibres. In another embodiment, the core may further include an open cell foam. The open cell foam is preferably laminated to one or more exterior planar faces of the plies of glass fibre mats.

In another embodiment of the invention, a shaped, three-dimensional vacuum insulation core for use in a vacuum insulation article is provided, where the core comprises glass fibre mats containing glass fibres. The glass fibres preferably have a diameter of less than about 5.0 microns, and are preferably highly oriented as described above. The three-dimensional vacuum insulation core preferably has a thermal resistivity of at least 55 m K/W per cm (an R value of at least 20 per inch). The three-dimensional core is preferably formed by a wet pulping/molding process and may be formed into a vacuum insulation article where a vacuum sealed enclosure contains the core.

The present invention also provides a method of making a vacuum insulating article which comprises providing a core comprised of multiple plies of glass fibres mats, inserting the core into an enclosure, and evacuating and sealing the enclosure. The core may be provided in flat form, or in a three-dimensional shape. Preferably, the method includes heating the core prior to inserting the core into an enclosure. The method also preferably includes inserting a desiccant or getter into the enclosure prior to evacuation and sealing. Preferably, the core is heated to a temperature of between about 204°C and 316°C (400°F and 600°F).

The enclosure is preferably evacuated to a pressure of between about 5.3 and 66.7 Pa (0.04 and 0.5 Torr), and more preferably, to a pressure of between about 5 and 11 Pa (0.04 and 0.08 Torr). The resulting vacuum insulation article preferably has a thermal resistivity value of at least 41 m K/W per cm (15 R per inch) at 133.3 pa (1.0 Torr), and more preferably, between about 109 to 137 m K/W per cm (40 to 50 R per inch) in the moderate vacuum range of between 13.3 Pa and 133.3 Pa (0.1 Torr and 1.0 Torr). Most preferably, the vacuum insulation article has a thermal resistivity of 123 m K/W per cm (an R value of 45 per inch) at 13.3 Pa (0.1 Torr).

Accordingly, it is a feature of the present invention to provide a vacuum insulation article and method of making a vacuum insulation article comprising a core of multiple plies of glass fibre mats containing highly oriented glass fibres and which operates in a moderate vacuum level range of about 5.3 to 133.3 Pa (0.04 to 1.0 Torr). Other features and advantages of the invention will be apparent from the following description, the accompanying drawings, and the appended claims.

### BRIEF DESCRIPTION OF THE DRAWINGS

Fig. 1 is a perspective view of a section of the vacuum insulation core of the present invention;
Fig. 1A is an expanded view of a section of the vacuum insulation core of Fig. 1;
Fig. 2 is a perspective view of a vacuum insulation article including the vacuum insulation core of Fig. 1;
Fig. 3 is a perspective view illustrating a section of the vacuum insulation core with the glass fibre plies oriented at 90 degrees to one another;
Fig. 4. is a perspective view illustrating a section of the core comprising medium diameter and small diameter glass fibres;
Fig. 5 is a perspective view of a vacuum insulation article including a vacuum insulation core laminated to an open cell foam;
Fig. 6 is a graph illustrating insulation performance of the vacuum insulating core of the present invention;
Fig. 7 is a perspective view of a shaped, three-dimensional vacuum insulation core formed in accordance with the present invention; and
Fig. 8 is a perspective view of a three-dimensional vacuum insulation core in the form of a box.

### DETAILED DESCRIPTION OF THE INVENTION

The vacuum insulation article utilizing the core of the present invention offers many advantages over other prior art insulation cores. The use of a vacuum insulation core comprising multiple plies of glass fibre mats with oriented glass fibres provides a higher operating temperature range than either open cell polystyrene or polyurethane cores, and is nonflammable. In addition, the R-value per inch is higher than other cores, making thinner vacuum insulation panels or shapes possible. For example, the use of laminated flexible plies allows curved or boxed shapes to be fabricated easily. Prior to evacuation, the plies are easily bent, yet become rigid when evacuated because the fibres interlock with friction. In addition, the thickness of the vacuum insulation article may be easily changed by removing or adding plies.

The core of the present invention is an open microporous structure consisting of compacted, highly laminar glass fibres oriented normal to the heat flow direction. As glass fibres cross the parallel planes or contours of temperature that exist in an insulation article, they tend to diminish its insulating ability. It has been found that by creating a core comprised of glass fibres which are located in parallel planes oriented about 90° to the direction of heat flow, i.e., parallel to the direction of the mat ply, superinsulation performance is greatly improved.

Further, the glass fibre mats exhibit high thermal resistivity (as measured in metric units of m.K/W or imperial units of R (hr.ft².°F/Btu.in)) at moderate vacuum levels of between about 13.3 Pa and 133.3 Pa (0.1 and 1.0 Torr), which is an improvement over prior art non-oriented large glass fibre board cores which must maintain a vacuum level between 0.01 and 0.02 Torr, and are more difficult to manufacture.

The vacuum insulation core of the present invention is non-flammable and has a self-gettering property with respect to water as it is hydrophilic. The glass fibre core is also inherently opaque to thermal radiation. This property further improves thermal resistivity performance. The continuous use temperatures of the core ranges between cryogenic to 538°C (1000°F) because of its glass structure. The glass fibre composition is preferably borosilicate-based, but may include rock wool, basalt, and soda lime. The upper and lower limits of use temperature ranges are dependent upon the glass type chosen. The fibres may be formed by conventional flame attenuated or rotary centrifugal glass fibre forming processes.

The vacuum insulation article of the present invention is relatively low in cost as it utilizes commercially available bulk glass fibres which can be processed using conventional paper-making machinery. The use of modified conventional wet pulp processes also allows three-dimensional shapes to be formed from the glass fibre mats.

It has been found that existing paper processes such as those used to make wood paper (e.g. Fourdrinier), silk paper, glass paper and the like, can be modified so that the glass fibres will lay down flat as the mat thickness rises, as opposed to a random orientation. The primary difference in the method of the present invention over prior paper processes is the modification of fibre orientation and mat thickness. In order to achieve the desired fibre orientation, the process is modified by changing the normal ratio of fibre to water and fibre settling time such that the fibre has time to orient parallel to the forming screen. For example, reducing the fibre ratio from about 2% by weight to about 1 % by weight in the slurry improves the dispersion of the fibre. In addition, slowing the fibre velocity down by about 50% as it approaches the forming screen allows sufficient time for the fibres to depart from the water streamlines and align in a highly laminar fashion. The settling time doubles from approximately 2 seconds to 4.5 seconds. It should be appreciated that the above values for slurry weight ratio, velocity, and settling time are approximate and that any reduction in weight ratio and velocity and any increase in settling time are within the scope of this invention. Vibrational energy may also be supplied in the forming step to further enhance fibre alignment.

An example of a paper process which is operated in the above manner is a Chinese silk paper process. Glass fibre mats made according to this process have been made by Isorca, Inc., of Granville, Ohio. One example of preferred glass fibre raw materials for use in the present invention are Chinese "super fine glass wool" fibres made in accordance with specification C-59 from Isorca, Inc.

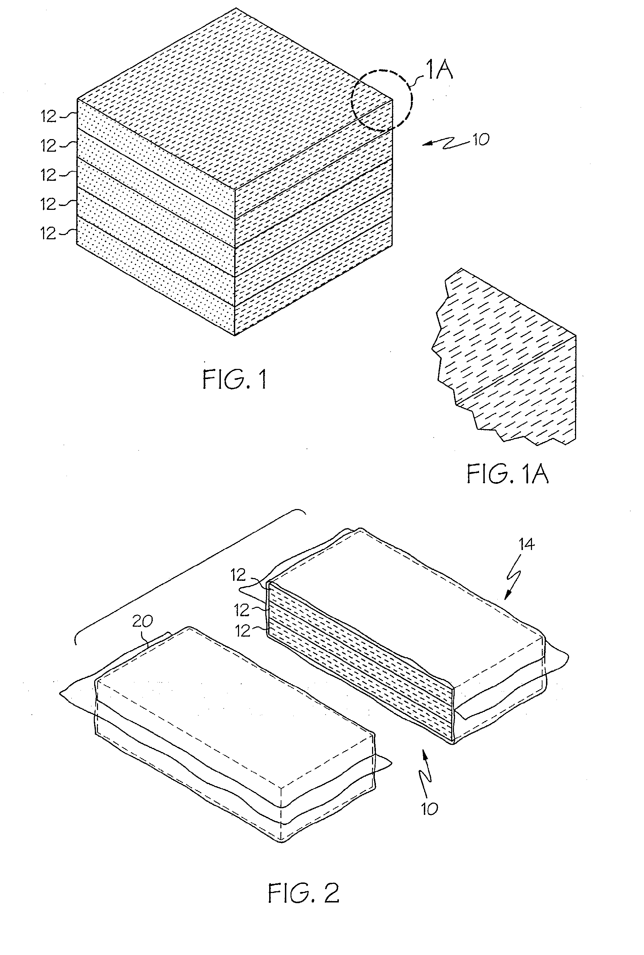

Referring now to Figs. 1 and 1A, a section 10 of the vacuum insulation core of the present invention is illustrated which includes multiple plies 12 of glass fibres . The vacuum insulation core may be formed using a variety of fibre sizes, densities, and orientations to allow the R-values to be tailored for specific uses. The glass fibres preferably comprise fibres having a diameter of less than 5.0 microns. Preferably, the fibre diameter, density, and orientation are chosen such that the highest thermal resistivity (as measured in either m K/W per cm, or R per inch) is achieved at the lowest total cost of the completed vacuum panel. A preferred combination for use in the present invention is a medium diameter fibre having a diameter of about 2.5 microns and a core density of about 240 kg/m³ (about 15 pounds per cubic foot). However, it should be appreciated that fibre diameters ranging from between about 0.3 microns and 5.0 microns are all suitable for use in the present invention.

Preferably, each of the multiple plies comprising the core has a thickness of between about 1.5 mm to 2.3 mm (0.060 inches to 0.090 inches), but may include thicknesses ranging from about 0.5 mm to about 25.4 mm (about 0.020 inches to about 1.0 inch). Such thicknesses are much greater than conventional glass paper plies, which range between 38 microns and 100 microns (0.0015 and 0.004 inches) in thickness. By using mats having greater ply thickness, the core may be constructed in less time with low damage and low cost. Typically, a one-inch thick vacuum insulation article produced in accordance with the present invention will be comprised of about 16 to 18 plies of glass fibre mat compared with over 250 plies of glass fibre paper.

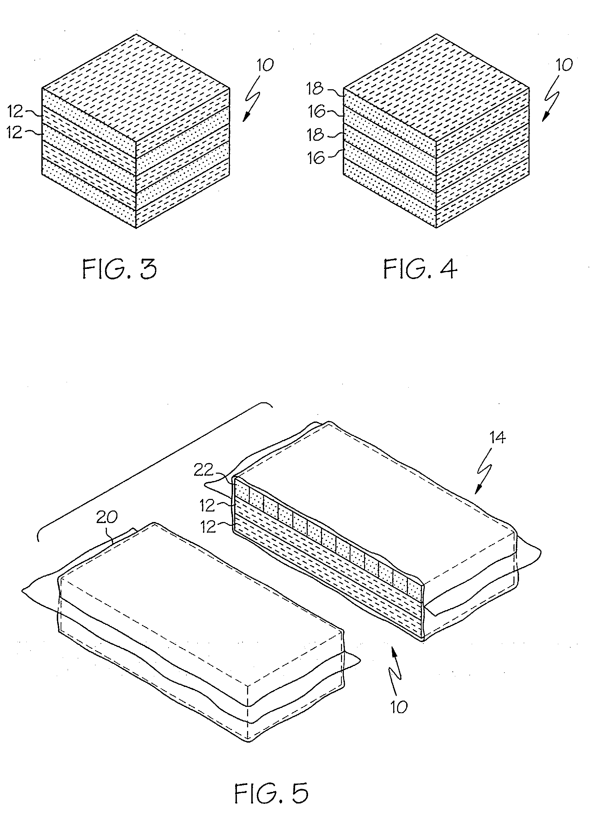

The thermal resistivity of the core is preferably at least 55 m K/W per cm (20 R per inch), but may range from between 41 m K/W per cm to 137 m K/W per cm (15 to 50 R per inch). The thermal resistivity may be tailored to provide 110 m K/W per cm to 137 m K/W per cm (40 to 50 R per inch) or more using the selection of fibre diameters and core densities described herein. In addition, the thermal resistivity value (R value) of the core may be tailored by combining plies of small diameter glass fibres 16 with plies of medium diameter glass fibres 18 as shown in Fig. 4. Interspersing medium diameter fibre plies between small diameter fibre plies results in more rapid evacuation of the article using evacuation tube technology. By "evacuation tube technology", it is meant an evacuation method in which a suction tube is inserted into the side of the vacuum insulation panel and sealed to the vacuum jacket or envelope. Air is removed through this suction tube and the weight of the air is applied to the core during evacuation. Such a process is described in U.S. Patent Nos. 5,900,299 and 6,106,449, which are incorporated herein by reference.

Plies may be removed or added to change the core thickness/R value. The glass fibres may also be mixed with polymeric fibres or other fibres such as carbons fibres, flake glass, mica, or low outgassing binders. Preferably, no organic binders are used as they may adversely affect vacuum maintenance. The fibres are held in place within the mat by fibre entanglement and friction. Once air is removed from the vacuum article, the plies are held together by friction.

The vacuum insulation core 10 is preferably made by forming glass fibre mats using conventional silk or paper making machinery which has been modified as described above. The plies may be formed into a flat shaped core by cutting and stacking the individual dry plies of glass fibre mats. The mat plies 12 may can be easily die-cut or can be cut by any other conventional methods such as water jet or shearing, and are then stacked on top of one another. It is also possible to stack multiple mat plies together and die cut them simultaneously. Depending on the way the fibres line up in the machine direction from the mat forming process, it may be preferable to orient the plies 90 degrees to one another as shown in Fig. 3 to balance the laminate construction, i.e., to control thermal conductivity. While the friction between the plies generally prevents them from sliding when stacked, an adhesive suitable for vacuum use may be sprayed between the plies to hold them together. Once the plies are stacked, they may be inserted into a vacuum bag and evacuated.

Alternatively, the glass fibres can be cast into three-dimensional core shapes using modified conventional wet pulping/molding methods. Examples of well-known wet pulping/molding methods include those used to produce molded wood paper pulp articles such as flower pots, egg cartons, and the like. Modifying these methods according to the parameters described above allows casting of highly laminar core shapes having highly complex geometries. To form three-dimensional shapes, the plies of glass fibre mats are not stacked as described above, but rather the entire core thickness is formed in one operation (within the thickness constraints described herein) using a wet forming screen.

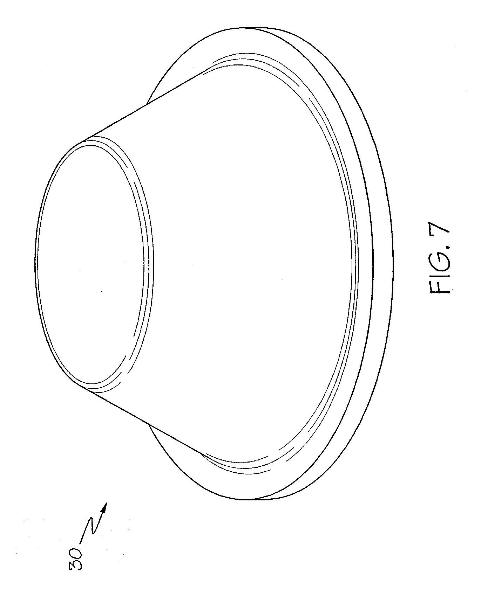

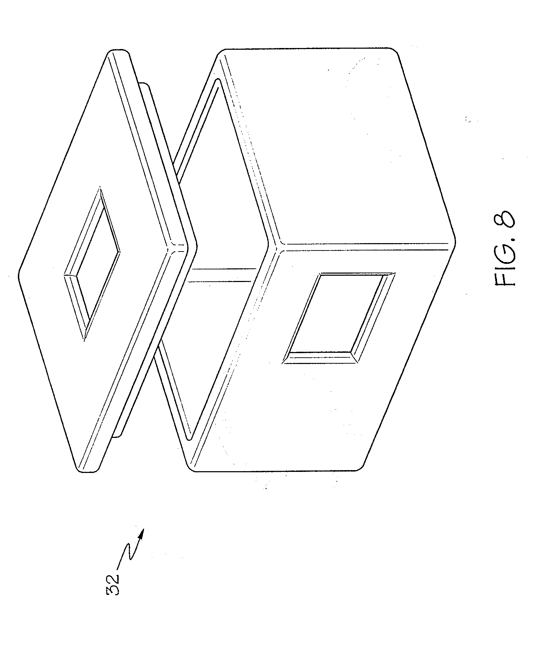

In a method similar to making flat ply mats, the slurry is formed and the fibre approach velocity is adjusted to provide a highly laminar fibre core. The fibres are then deposited substantially parallel to a shaped wet forming screen to form the shaped core. Vibrational energy may be supplied in this step to enhance fibre alignment. For example, the Chinese silk paper process imparts vibrational energy to the forming screen which further augments the alignment of the fibres. Other known fibre aligning techniques may also be used to form the highly laminar cores of the present invention. After the wet formed/molded product is set, excess water is removed by any suitable technique including draining, suction, preheating, or any suitable means to enhance the rate of water removal. The formed core is then removed from the mold and dried in a convection oven or any suitable drying device. An example of a three-dimensional shape which may be formed in accordance with the method of the present invention is illustrated in Fig. 7. The core is in the form of a bowl 30. Fig. 8 illustrates another three-dimensional shaped core in the form of a box 32.

The dried three-dimensional core shapes remain rigid upon the application of vacuum or removal of air from the article (as do the flat cores). Examples of shapes that can be formed by this method include small to large rectangular boxes or other shapes that are designed to contain temperature sensitive cargo. By using one molding operation, it is fast and inexpensive to build small boxes using individual core plies or vacuum insulation articles. One example is a five-sided box which is 10.2 cm (4 inches) high, 20.3 cm (8 inches) long, and 14 cm (5.5 inches) wide, with radiused edges and optional depressions in one or more of its interior surfaces to receive the cargo which may comprise vaccines, pharmaceuticals, or the like. This box may include a sixth side comprising a lid or top that may comprise a flat vacuum insulation article or a complex plug-shaped top vacuum insulation article which functions to improve the thermal efficiency of the completed box shaped vacuum article. Additional examples of shaped boxes which may be used in the present invention as well as methods of incorporating the boxes into a sealed enclosure are described in U.S. Patent Nos. 5,900,299, 6,106,449, and copending U.S. Application serial No. 09/642,877 entitled VACUUM INSULATED PANEL AND CONTAINER AND METHOD OF PRODUCTION.

It should be appreciated that additional boxes of complex shapes may also be made in accordance with the present invention. The wall thicknesses are generally about 2.54 cm (1 inch) or less depending on the desired thermal resistance value (R value) for the application.

Fig. 2 illustrates a vacuum insulation article 14 (shown in broken form) in the form of a vacuum insulation panel which contains the core 10. The article 14 comprises an enclosure 20 which may be in the form of a pouch or bag of flexible barrier film material which is impervious to the passage of air and other gases. The enclosure preferably comprises a multiplayer, heat sealable metallized polymer film. The enclosure may also comprise polymer films bonded to aluminum foil, and mixed or pure polymer films. Suitable high gas barrier polymer films for use include, but are not limited to, polyester terephthalate (PET), polyvinylidene chloride, and acrylonitrile (PAN). Films of this type with even higher barrier properties may be made by aluminum metallizing or sputtering techniques using any suitable metal, and then bonding with the sealing film layer. Metal foils can be used in place of metallizing or sputtering. Suitable sealing film layers include polyethylene, polypropylene, and polyester co-copolymer films. Suitable vacuum insulation panels and methods for use in the present invention are described in U.S. Patent Nos. 5,827,385, 5,900,299, 5,943,876, 5,950,450, 6,106,449, 6.192,703, D361,933, and U.S. Application Serial Nos. 09/642,877 and 09/783,876.

Preferably, the vacuum insulation core 10 is heated prior to evacuation to remove bound water and other impurities to ensure long life. The core is preferably heated to about 204°C (400°F) for about 60 minutes or to about 316°C (600°F) for about 15 minutes or less to remove the majority of the water from the glass fibres. It should be appreciated that heating the core enhances and activates its self-gettering or desiccating properties. Conventional desiccants such as CaO or getters may optionally be added between mat plies to enhance the life of the core. Such desiccants or getters may be added once the core has been cooled in air to about 121°C (250°F). It is preferable to insert the completed core into the heat sealable film envelope while it is at an elevated temperature state in order to minimize the amount of water which can reabsorb into the glass fibres.

Air may be evacuated from the vacuum insulation core using conventional methods in which air is evacuated from the core in a vacuum chamber, or using the evacuation tube method described above. After evacuation, the core assembly becomes rigid and non-sliding.

If desired, the plies 12 of the core may be laminated to an open cell foam 22 prior to evacuation as shown in Fig. 5. This arrangement allows the foam to operate at higher than normal temperatures.

The vacuum insulation core of the present invention may be used in a variety of applications including the aerospace, transportation, bio-medical, food delivery and appliance industries. For example, the vacuum insulation core may be used in water heaters, refrigerators and in shipping containers where flexibility is desired.

In order that the invention may be more readily understood, reference is made to the following example which is intended to illustrate the invention, but not limit the scope thereof.

### Example 1

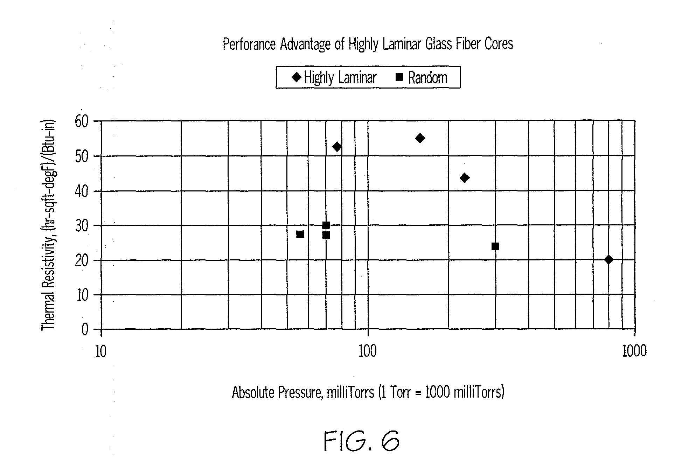

Two sets of flat panel vacuum insulation cores were prepared. Each set contained four core samples from which four vacuum insulation articles were made. The cores were identical with the exception that the "highly laminar" set contained glass fibres oriented in accordance with the present invention. The "random" set contained glass fibres oriented randomly in all directions. The four core samples in both sets were made with 8 plies each of 2.5 micron diameter glass fibre, 240 kg/m³ (15 lb ./ft.³) core density, and 1.14 cm (0.45 inch) total compressed thickness. The cores were in the form of square panels (30cm (12 inches) per side). These cores were heated to 204°C (400° F), cooled to 104°C (220°F), included 5 g of CaO desiccant, and were heat sealed within a vacuum envelope made of a Toyo® foil film to form the vacuum article. A variety of absolute pressures were chosen to demonstrate performance of the vacuum articles. Thermal resistivity values (R/inch) were obtained one week after manufacture according to ASTM C-518-91 at 24°C (75° F) mean temperature. As can be seen from the data contained in Fig. 6, the use of the vacuum insulation core of the present invention comprising "highly laminar" (oriented) glass fibres results in a significant increase in thermal resistivity when compared with the core formed from "random" (randomly-oriented) glass fibres.

## Claims

1. A vacuum insulation article comprising:
a core comprised of multiple plies of glass fibre mats containing highly oriented glass fibres; and
a vacuum sealed enclosure containing said core.

2. The vacuum insulation article of claim 1 wherein said glass fibres have a diameter of less than about 5.0 microns.

3. The vacuum insulation article of claims 1 and 2 wherein said enclosure comprises a polymer film.

4. The vacuum insulation article of claims 1-3 having a thermal resistivity value of at least 55 m K/W per cm (R value of at least 20 per inch).

5. The vacuum insulation article of claims 1-4 having a thermal resistivity value between 109 m K/W per cm and 137 m K/W per cm (R value of between 40 and 50 per inch).

6. The vacuum insulation article of claims 1-5 wherein said glass fibres have a diameter of between 0.3 and about 3.0 microns.

7. The vacuum insulation article of claims 1-6 wherein said glass fibres have a diameter of about 2.5 microns.

8. The vacuum insulation article of claims 1-7 wherein said core has a density of between 64 and 401 kg/m³ (4 and 25 lbs/ft.³).

9. The vacuum insulation article of claims 1-8 wherein said core has a density of about 240 kg/m³ (15 lbs/ft³).

10. The vacuum insulation article of claims 1-9 wherein each of said multiple plies in said core has a thickness of between 0.5 mm and 25.4 mm (0.020 inches and about 1.0 inches).

11. The vacuum insulation article of claims 1-10 wherein each of said multiple plies in said core has a thickness of between 1.5mm and 2.3 mm (0.060 inches and about 0.090 inches).

12. The vacuum insulation article of claims 1-11 wherein said plies are in the form of a stack and are oriented at 90 degrees to one another.

13. The vacuum insulation article of claims 1-12 wherein said glass fibres comprises a combination of medium diameter glass fibres and small diameter glass fibres.

14. The vacuum insulation article of claims 1-13 wherein said core further comprises fibres selected from polymeric fibres and carbon fibres.

15. The vacuum insulation article of claims 1-14 further including an open cell microporous foam.

16. A vacuum insulation article comprising:
a core comprised of one or more glass fibre mats; and
a vacuum sealed enclosure containing said core, said vacuum insulation article having a thermal resistivity value of between 109 m K/W per cm and 137 m K/W per cm (R value of between 40 and 50 per inch) at a moderate vacuum level of between 13.3 Pa and 133.3 Pa (0.1 and 1.0 Torr).

17. A vacuum insulation core for use in a vacuum insulation article, said core comprising multiple plies of glass fibre mats containing highly oriented glass fibres.

18. The vacuum insulation core of claim 17 wherein said glass fibres have a diameter of less than about 5.0 microns.

19. The vacuum insulation core of claims 17-18 having a thermal resistivity value of at least 55 m K/W per cm (R value of at least 20 per inch).

20. A method of making a vacuum insulation article comprising:
providing a core comprised of multiple plies of glass fibre mats containing highly oriented glass fibres;
inserting said core into an enclosure; and
evacuating and sealing said enclosure.

21. The method of claim 20 including heating said core prior to inserting said core into said enclosure.

22. The method of claims 20-21 including inserting a desiccant or getter into said enclosure prior to evacuating and sealing said enclosure.

23. The method of claims 20-22 where said core is heated to a temperature of between 204°C and 316°C (400°F and 600°F).

24. The method of claims 20-23 wherein said enclosure is evacuated to a pressure of between 5 Pa and 67 Pa (0.04 and 0.5 Torr).

25. The method of claims 20-23 wherein said enclosure is evacuated to a pressure of between 5 Pa and 11 Pa (0.04 and 0.08 Torr).

26. The method of claims 20-25 wherein said glass fibres have a diameter of less than about 5.0 microns.

27. The method of claims 20-26 wherein said core is in the form of a flat shape.

28. The method of claims 20-27 wherein said core is in the form of a three-dimensional shape.

29. The method of claim 28 wherein said three-dimensional shape is formed by a wet pulping/molding process.

30. A shaped, three-dimensional vacuum insulation core for use in a vacuum insulation article, said core comprising glass fibre mats containing glass fibres.

31. The three-dimensional vacuum insulation core of claim 30 wherein said glass fibres have a diameter of less than about 5.0 microns.

32. The three-dimensional vacuum insulation core of claims 30-31 wherein said glass fibres are highly oriented.

33. The three-dimensional vacuum insulation core of claims 30-32 having thermal resistivity of at least 55 m K/W per cm (R value of at least 20 per inch).

34. The three-dimensional vacuum insulation core of claims 30-33 wherein said core has been formed by a wet pulping/molding process.

35. A vacuum insulation article containing the three-dimensional vacuum insulation core of claims 30-34, said article including a vacuum sealed enclosure containing said core.
